**Europäisches Patentamt**

**European Patent Office**

**Office européen des brevets**

(11) Veröffentlichungsnummer: **0 271 856**
**A2**

(12) # EUROPÄISCHE PATENTANMELDUNG

(21) Anmeldenummer: **87118459.4**

(51) Int. Cl.⁴: **G01D 1/00**

(22) Anmeldetag: **12.12.87**

(30) Priorität: **15.12.86 DE 3642771**

(43) Veröffentlichungstag der Anmeldung:
**22.06.88 Patentblatt 88/25**

(84) Benannte Vertragsstaaten:
**AT CH DE FR GB IT LI**

(71) Anmelder: **Kuipers, Ulrich, Dipl.-Ing.**
**Hatzenbergstrasse 32**
**D-5960 Olpe(DE)**

Anmelder: **Denker, Michael, Dipl.-Ing.**
**Am Spielplatz 6**
**D-5439 Bad Marienberg(DE)**

Anmelder: **Bonfig, Karl Walter**
**Asternweg 17**
**D-5910 Kreuztal(DE)**

(72) Erfinder: **Kuipers, Ulrich, Dipl.-Ing.**
**Hatzenbergstrasse 32**
**D-5960 Olpe(DE)**
Erfinder: **Denker, Michael, Dipl.-Ing.**
**Am Spielplatz 6**
**D-5439 Bad Marienberg(DE)**
Erfinder: **Bonfig, Karl Walter**
**Asternweg 17**
**D-5910 Kreuztal(DE)**

(74) Vertreter: **CHRISTIANSEN & NINNEMANN**
**Dietrich-Schäfer-Weg 21**
**D-1000 Berlin 41(DE)**

(54) **Verfahren und Vorrichtung zur Messung der Messgrösse eines Messobjektes.**

(57) Die direkte digitale Messung (Direkt-Digital-Measurement, DDM) ermöglicht die Bestimmung der Meßgröße eines beliebigen Meßobjektes (z.B. eines Kondensators) mit geringem Aufwand und mit hoher Genauigkeit unter gezieltem Einsatz der Digitaltechnik, wobei insbesondere Meßungenauigkeiten wie sie z.B. aus Meßschaltungstoleranzen und unvermeidlichen Störgrößen wie Offseteinflüssen, Driften u.dgl. herrühren, eliminiert werden und das ermittelte Meßergebnis unmittelbar ausgewertet und angezeigt werden kann, wobei gleichzeitig wegen des geringen Bauteileaufwands eine Miniaturisierung der Meßvorrichtung und somit eine Integration in Sensoren möglich ist.

Bei diesem Verfahren wird an das Meßobjekt eine von einem Mikroprozessor vorgegebene Hilfsgröße mit digitalem, pseudozufälligen Zeitverlauf - wobei diese nach jedem Meßintervall für eine festlegbare Zeitdauer unterbrochen wird - angelegt.

Das analoge Meßsignal wird über einen Analog/Digital-Wandler dem Prozessor zugeführt. Die aus der bekannten Hilfsgröße resultierenden Anteile des Meßsignals werden herausgefiltert und nur die aus der Hilfsgröße resultierenden Anteile zur Bestimmung der Meßgröße herangezogen. Hierzu wird das vom Prozessor auszugebende Steuersignal mit dem Meßsignal zu einer kreuzkorrelationsähnlichen Funktion verarbeitet.

FIG. 1

## Verfahren und Vorrichtung zur Messung der Meßgröße eines Meßobjekts

Gegenstand der Erfindung ist ein Verfahren zur Messung der Meßgröße eines Meßobjektes, an das eine Hilfsgröße anelegt wird und das mit einem Meßwertaufnehmer oder Sensorelement gekoppelt ist, der ein der Meßgröße entsprechendes, direkt meßbares, analoges Meßsignal abgibt, wobei aus der Hilfsgröße und dem Meßsignal auf die Meßgröße geschlossen wird sowie eine Verwendung des Verfahrens zur Messung von elektrischen und nichtelektrischen Größen und eine Vorrichtung zur Durchführung des Verfahrens.

Ein Verfahren der genannten Art zur Messung nichtelektrischer Größen ist aus der DE-OS 33 33 129 bekannt, bei dem die nichtelektrische Größe wie Kraft, Druck und Temperatur über die Deformation eines Wellenleiters gemessen wird, wobei die zu messende Größe auf einen Interdigitalwandler einwirkt, der eine kodierte akustische Oberflächenwelle empfängt, die mittels Korrelationsempfang dekodiert und bezüglich des Korrelationsmaximums ausgewertet wird. Als kodiertes Oberflächenwellensignal kann ein binärphasengetastetes Signal oder ein Schirp-Signal benutzt werden. Zu diesem Zweck werden auf einem piezoelektrischen Substrat zwei Interdigitalwandler aufgebracht, von denen ein Wandler als Signalsender und der andere Wandler als Filter für den Empfang des Sendesignals ausgebildet ist. Das Empfangsfilter stellt ein Matched-Filter für das Sendesignal dar und ist entweder für den Empfang des binärphasengetasteten Signals oder des linear frequenzmodulierten Schirp-Signals durch entsprechende Wandlergewichtung ausgebildet. Wirken keine nichtelektrischen Meßgrößen auf die Interdigitalwandlerstruktur des Matched-Filters ein, so wird am Ausgang des Filters die Autokorrelationsfunktion mit maximalem Haupt-Nebenzipfelverhältnis gemessen. Wirken dagegen entsprechende Meßgrößen auf den Interdigitalwandler ein, so wird die Geometrie des Wandlers und in dessen Folge die Übertragungsfunktion des Wandlers geändert und das vom Sendewandler erzeugte Signal fehlabgestimmt empfangen. Das äußert sich in einer Verkleinerung des Autokorrelationsmaximums und ist damit elektrisch auswertbar.

Ein Verfahren zur Ermittlung momentaner Strömungsgeschwindigkeiten ist aus der Offenlegungsschrift DE 3106530 A1 bekannt. Hierbei werden pseudozufällig markierte Strömungsmittelteilchen zur Laufzeitmessung genutzt. Hierzu wird die Lage des Maximums einer Kreuzkorrelationsfunktion verwendet.

Aus W. D. T. Davies: System Identification for Self-Adaptive Control; John Wiley and Sons, Ltd.; London; 1970 sind pseudozufällige Signale maximaler Länge bekannt. MBS-Signale sind aus A. Van den Bos: Construction of Binary Multifrequency Test Signals; IFAC Symp.; Prague; 1967 bekannt.

Aus der DE-OS 30 15 519 ist ein Verfahren zur Bestimmng der Kapazität eines Meßobjektes, an dem zusätzlich eine Stör-Gleichspannung anliegt, bekannt, bei dem eine durch einen Auf-oder Entladevorgang festgelegte Zeitkonstante ermittelt und daraus die gesuchte Kapazität bestimmt wird. Die Bestimmung der Zeitkonstante wird durch drei Strommessungen durchgeführt, wobei die zweite, mit dem Schaltvorgang bei einer Anschaltung zweier Meßwiderstände an das Meßobjekt beginnende Messung integrierend erfolgt. Zur Durchführung dieses Verfahrens dient eine Schaltungsanordnung, die einen Zweipol aufweist, der die beiden Meßwiderstände enthält, wobei beim Zweipol ein den Meßwiderständen zugeordneter Schalter vorgesehen ist, der die wahlweise Anschaltung des jeweiligen Meßwiderstandes gestattet. Dabei können die beiden Meßwiderstände entweder parallel geschaltet und über einen Umschalter angeschaltet oder in Serie geschaltet und einer der Meßwiderstände über einen Schalter wahlweise überbrückt werden.

Es sind weiterhin Verfahren und Vorrichtungen zur Messung von Widerständen, Kapazitäten und Induktivitäten bekannt, die sich grundsätzlich in vier verschiedene Gruppen unterteilen lassen:

1. Der Wert des zu bestimmenden Bauelementes wird mittels einer Brückenschaltung ermittelt. Bei die sem, aus der Literaturstelle "Profos: Handbuch der industriellen Meßtechnik" (Vulkan-Verlag-Essen; 3. Auflage; Essen 1984) bekannten Verfahren besteht die Versorgungsspannung für die Brückenschaltung entweder aus einer sinusförmigen Spannung oder einer Gleichspannung. Der Meßwert kann durch Abgleichen der Brücke oder aus der Brückenspannung bestimmt werden. Problematisch ist bei diesem Verfahren, daß die Versorgungsspannung entweder einen sehr guten sinusförmigen Verlauf mit konstanter Amplitude und Frequenz, d.h. einen kleinen Klirrfaktor haben muß, oder daß sie als genaue driftfreie Gleichspannung angelegt werden muß.

2. Das zu messende Bauelement wird als frequenzbestimmendes Element in einen Oszillator eingebaut. Bei diesem, beispielsweise aus der DE-OS 28 16 655 bekannten Verfahren besteht ein Nachteil darin, daß die Frequenz des Oszillators während der Meßzeit konstant sein muß, wobei sie von Messung zu Messung variabel sein kann.

3. Das zu messende Bauelement wird mit einem bekannten Bauelement zu einem Verzögerungsglied verschaltet, um aus dem Aufladevorgang und/oder dem Entladevorgang auf den Wert des zu messenden Bauelementes zu schließen, wie es beispielsweise aus der vorstehend genannten DE-OS 30 15 519 bekannt ist. Hierbei wird entweder die Zeit gemessen bis der Strom in die Schaltung oder die Spannung an der Schaltung einen bestimmten Wert erreicht hat, oder es wird nach einer festen Zeit der Strom in die Schaltung oder die an ihr anliegende Spannung gemessen. Dabei ist von Nachteil, daß ein Offset in der gemessenen Größe nicht oder nur ungenau eliminiert werden kann, daß ein in dieser Größe enthaltener, linear mit der Zeit verlaufender Störanteil wie beispielsweise eine Drift, nicht eliminiert wird und daß zum Teil sehr lange Meßzeiten in Kauf genommen werden müssen.

4. Es wird der Scheinwiderstand des zu messenden Bauelementes bestimmt, wobei ähnliche Probleme auftreten wie bei dem unter Punkt 1 benannten Meßverfahren.

Aufgabe der vorliegenden Erfindung ist es, ein Verfahren zur Messung der Meßgröße eines Meßobjektes anzugeben, bei dem die Meßgröße eines beliebigen Meßobjektes mit geringem Aufwand und mit hoher Genauigkeit unter gezieltem Einsatz der Digitaltechnik bestimmt werden kann, wobei insbesondere Meßungenauigkeiten wie Meßschaltungstoleranzen sowie der Einfluß überlagerter Störgrößen auf das Meßergebnis, wie beispielsweise Offseteinflüsse, Driften o.dgl. eliminiert werden und das Meßergebnis unmittelbar angezeigt werden kann.

Diese Aufgabe wird erfindungsgemäß dadurch gelöst, daß die Hilfsgröße den zeitlichen Verlauf eines pseudozufälligen Rauschsignals aufweist, das von einem steuerbaren Hilfsgrößengenerator, unter Steuerung eines von einem Prozessor abgegebenen Steuersignals, abgegeben und nach jedem Meßintervall für eine festlegbare Zeitspanne unterbrochen wird, daß das analoge Meßsignal über einen Analog/Digital Wandler als digitalisiertes Meßsignal dem Prozessor zugeführt wird, daß die aus der bekannten Hilfsgröße resultierenden Anteile der Meßgröße oder des Meßsignals herausgefiltert und nur aus den aus der Hilfsgröße resultierenden Anteilen des Meßsignals die Meßgröße bestimmt wird, indem das vom Prozessor abgegebene Steuersignal mit dem Meßsignal zu einer kreuzkorrelationsähnlichen Funktion verarbeitet wird, wobei die Hilfsgröße und die kreuzkorrelationsähnliche Funktion dergestalt sind, daß Auswirkungen von Offsetgrößen eliminiert werden, und wobei die Werte der zur Bestimmung der Meßgröße verwendeten kreuzkorrelationsähnlichen Funktion so ausgewertet werden, daß der Einluß eines im Meßsignal enthaltenen lineareren Anteils auf das Meßergebnis eliminiert wird.

Die erfindungsgemäße Lösung ermöglicht die Bestimmung der Meßgröße eines beliebigen Meßobjektes mit geringem Aufwand und mit hoher Genauigkeit unter gezieltem Einsatz der Digitaltechnik, wobei insbesondere Meßungenauigkeiten wie Meßschaltungstoleranzen und unvermeidliche Störgrößen wie Offseteinflüsse, Driften u.dgl. eliminiert werden und das ermittelte Meßergebnis unmittelbar ausgewertet und angezeigt werden kann.

Eine Vorrichtung zur Durchführung des erfindungsgemäßen Verfahrens soll unter Einbeziehung der obengenannten Aufgabenstellung die zusätzliche Aufgabenstellung erfüllen, daß sie aus wenigen Komponenten besteht, leicht miniaturisierbar und somit in Sensoren integrierbar ist.

Diese Aufgabe wird erfindungsgemäß dadurch gelöst, daß ein Mikroprozessor vorgesehen ist, dessen Ausgang einerseits mit einem Anzeigegerät und andererseits mit dem Hilfsgrößengenerator zur Abgabe von Steuersignalen an den Hilfsgrößengenerator verbunden ist, daß der Ausgang des Hilfsgrößengenerators eine Hilfsgröße an das Meßobjekt abgibt, das mit einem Meßwertaufnehmer oder Sensorelement zur Erfassung des Meßwertes verbunden ist, daß der Ausgang des Meßwertaufnehmers oder Sensorelements zur Abgabe des Meßsignals mit dem Eingang eines Analog/Digital-Wandlers verbunden ist, der zusätzlich eine Referenzspannung an den Hilfsgrößengenerator abgibt und daß der Ausgang des Analog/Digitalwandlers mit dem Eingang des Mikroprozessors verbunden ist.

Diese erfindungsgemäße Lösung schafft eine Vorrichtung zur Bestimmung der Meßgröße eines beliebigen Meßobjektes mit geringem Aufwand und mit hoher Genauigkeit unter gezieltem Einsatz der Digitaltechnik, bei dem Meßungenauigkeiten eliminiert werden und das Meßergebnis unmittelbar angezeigt werden kann, wobei gleichzeitig eine Miniaturisierung der Meßvorrichtung und somit Integration in Sensoren möglich ist.

Das erfindungsgemäße Verfahren sowie die erfindungsgemäße Vorrichtung eignen sich insbesondere zur elektrischen Messung nichtelektrischer Größen in Verbindung mit kapazitiven, induktiven, resistiven, magnetischen, elektrischen und/oder optischen Meßwertaufnehmern, Sensoren und intelligenten Sensoren zur Messung von nichtelektrischen Größen, beispielsweise mechanischen, physikalischen oder chemischen und/oder elektrischen Größen und/oder Längen, Massen, Kräften, Temperaturen, Winkeln, Strahlung, Licht, Stoffzusammensetzung, Stoffkonzentration, Schallwellen, Feuchtigkeit, Drücken, Dehnungen, Trübungen, Absorptionsspektren, Füllständen, Durchflußmessungen, sowie daraus abgeleiteten Größen; sowie zur Messung und/oder Überprüfung von Bauelementen in eingeschalteten elektronischen Schaltungen; sowie zur Messung von Übersprechen, elektromagnetischen Kopplungen und/oder elektro magnetischer Verträglichkeit, wobei die Hilfsgröße zur Steuerung einer Störquelle oder als Störsignal verwendet wird und das Signal an der gestörten Schaltung oder dem gestörten Kanal als Meßsignal dient.

Zur elektrischen Messung nichtelektrischer Größen können, wegen der hohen Auflösung und Genauigkeit des erfindungsgemäßen Meßverfahrens, auch Sensoren realisiert werden, bei denen das elektrische oder magnetische Feld (teilweise) räumlich außerhalb des eigentlichen Sensorelements liegt; es können auch elektrische oder magnetische Änderungen von Streufeldern als Meßeffekt ausgenutzt werden.

Insgesamt ist das Meßverfahren allgemein anwendbar für die elektrische Messung physikalischer Größen, die durch Einwirkung einer Hilfsgröße bzw. Hilfsenergie, z.B. einer elektrischen Spannung und/oder eines elektrischen Stromes bei der Bestimmung eines Widerstandes oder dem Spulenstrom bzw. der magnetischen Feldstärke bei der magnetisch-induktiven Durchflußmessung, gemessen werden können. Hierzu wird die Hilfsgröße umschaltbar realisiert. Während eines Meßvorganges wird die Hilfsgröße unregelmäßig umgeschaltet. Jeder der Ausgangswerte des Sensorelements bzw. Meßwertaufnehmers kann dann z.B. mit Hilfe eines Ein-Chip-Mikroprozessors mit integriertem Analog/Digital-Wandler mit allen Sollwerten der Hilfsgröße verarbeitet werden. Die Verarbeitung erfolgt mittels einer modifizierten Korrelation, wobei durch die Anwendung dieses Verfahrens viele Störungen, wie z. B. Brummeinflüsse, Verstärkerdrift, Temperaturdrift usw. eliminiert und somit sehr genaue Meßgeräte realisiert werden können, wobei der Bauteileaufwand und somit die Kosten sehr gering sind. Sie lassen sich im wesentlichen auf die umschaltbare Hilfsenergiequelle und einen Ein-Chip-Mikroprozessor reduzieren. Durch Integration der digitalen Auswertevorrichtung im Meßwertaufnehmer können hochgenaue und preiswerte intelligente Sensoren hergestellt werden.

Anhand eines in der Zeichnung dargestellten Ausführungsbeispieles soll der der Erfindung zugrundeliegende Gedanke näher erläutert werden. Es zeigen:

Fig. 1 ein Blockschaltbild zur Messung der Meßgröße eines Meßobjektes mit Hilfe eines Mikroprozessors;

Fig. 2 ein Blockschaltbild gemäß Fig. 1 mit detaillierter Darstellung des Hilfsgrößengenerators zur Kapazitätsmessung;

Fig. 3 eine Darstellung des zeitlichen Verlaufs des Kondensatorstromes und der Kondensatorspannung bei Anwendung der Meßvorrichtung gemäß Fig. 2;

Fig. 4 ein Flußdiagramm zur Erläuterung der Kapazitätsmessung unter Verwendung der Vorrichtung gemäß Fig. 2;

Fig. 5 ein Blockschaltbild gemäß Fig. 1 mit detaillierter Darstellung des Hilfsgrößengenerators zur Induktivitätsmessung;

Fig. 6 eine vereinfachte Schaltung zur Induktivitätsmessung gemäß Fig. 5 ;

Fig. 7 eine vereinfachte Schaltung zur Kapazitätsmessung gemäß Fig. 2;

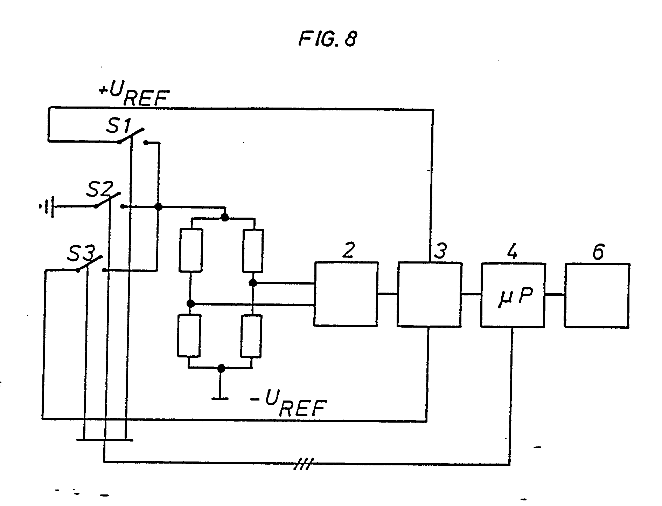

Fig. 8 eine vereinfachte Schaltung zur Messung einer Brückenspannung wobei die Brücke beispielsweise in einem piezoresistiven Druckaufnehmer enthalten sein kann;

Fig. 9 eine Schaltung eines Analogschalters der im eingeschalteten Zustand eine vernachlässigbare Durchlaßspannung aufweist und

Fig. 10 eine Schaltung eines Analogschalters der im eingeschalteten Zustand eine vernachlässigbar kleine Durchlaßspannung aufweist und die Signalquelle nicht belastet.

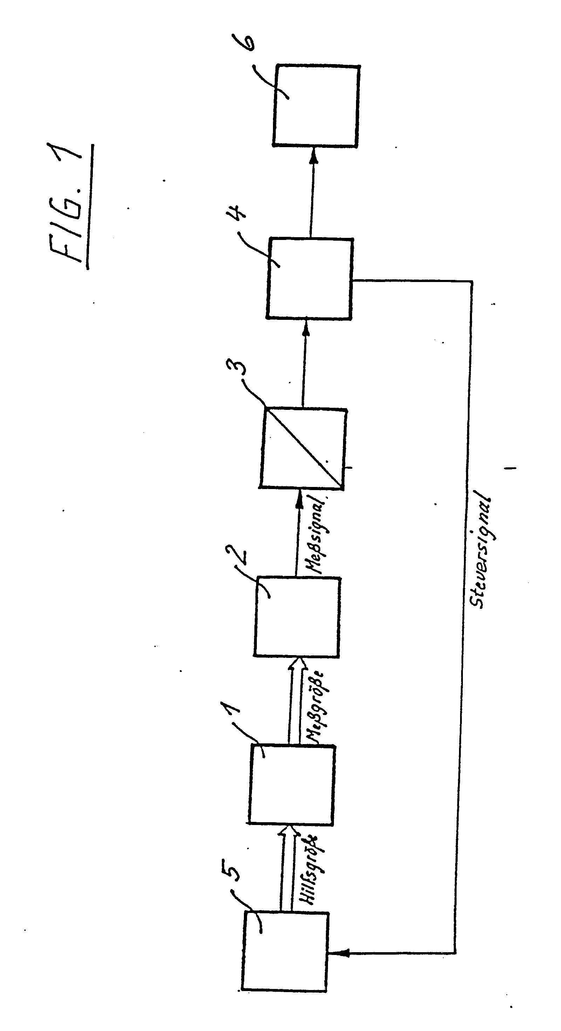

Das in Fig. 1 dargestellte Blockschaltbild zeigt ein beliebiges Meßobjekt (1), auf das eine Hilfsgröße einwirkt, die von einem Hilfsgrößengenerator (5) abgegeben wird. Der Hilfsgrößengenerator (5) wird von einem von einem Mikroprozessor (4) abgegebenen Steuersignal angesteuert und empfängt zusätzlich ein Referenzsignal, das von einem Analog/Digital-Wandler (3) abgegeben wird, der eingangsseitig mit einem analogen Meßsignal beaufschlagt wird, das von einem Meßwertaufnehmer (2) abgegeben wird, der mit dem Meßobjekt (1) gekoppelt ist und den durch die Hilfsgröße ausgelösten Meßwert erfaßt und ausgangsseitig sowohl mit dem Mikroprozessor (4) zur Abgabe eines dem analogen Meßsignal entsprechenden digitalen Signals als auch mit dem Hilfsgrößengenerator zur Abgabe des Referenzsignals verbunden ist.

Der Mikroprozessor (4) ist zusätzlich mit einer Anzeige (6) zur unmittelbaren Anzeige des Meßwertes verbunden, wobei die Anzeige nach vorangegangener Auswertung und Berechnung erfolgt.

Zur Messung der Meßgröße des Meßobjekts (1) gibt der Mikroprozessor (4) ein Steuersignal an den Hilfsgrößengenerator (5) ab, der daraufhin an das Meßobjekt eine Hilfsgröße anlegt, wobei die Hilfsgröße den zeitlichen Verlauf eines pseudozufälligen Rauschsignals nimmt welches nach jedem Meßintervall für eine festlegbare Zeitspanne unterbrochen wird. Der mit dem Meßobjekt (1) gekoppelte Meßwertaufnehmer (2) gibt ein direkt meßbares, analoges Signal an den Analog/Digital-Wandler (3) ab, wobei aus der vom Hilfsgrößengenerator (5) abgegebenen Hilfsgröße bzw. deren Sollwerten und dem vom Meßwertaufnehmer (2) abgegebenen Meßsignal mittels des Mikroprozessors (4) die Meßgröße des Meßobjektes berechnet wird.

Da die Sollwerte der Hilfsgröße aufgrund der vom Mikroprozessor (4) abgegebenen Steuersignale bekannt sind, können die aus der Hilfsgröße resultierenden Anteile der Meßgröße bzw. des Meßsignals herausgefiltert werden und die Meßgröße nur aus den aus der Hilfsgröße resultierenden Anteilen des Meßsignals bestimmt werden. Zu diesem Zweck wird das vom Mikroprozessor (4) abgegebene Steuersignal mit dem Meßsignal zu einer kreuzkorrelationsähnlichen Funktion verarbeitet, wobei die Hilfsgröße und die kreuzkorrelationsähnliche Funktion so aufgebaut sind, daß Auswirkungen von störenden Offsetgrößen auf das Meßergebnis eliminiert werden. Die Werte der zur Berechnung der Meßgröße verwendeten kreuzkorrelationsähnlichen Funktion werden vom Mikroprozessor so ausgewertet, daß ein im Meßsignal ent haltener linearer Störanteil keine Auswirkungen auf das Meßergebnis hat.

Vorteilhafterweise wird der Meßvorgang mehrfach hintereinander wiederholt und ein Mittelwert der aus jedem Meßvorgang resultierenden Meßgrößen berechnet.

Die Hilfsgröße selbst kann aus einem zeitdiskreten und/oder amplitudendiskreten Signal bestehen sowie aus einer Folge rechteckförmiger Impulse unterschiedlicher Zeitdauer und/oder unterschiedlicher Amplitude aufgebaut sein. Vorteilhafterweise nimmt die Hilfsgröße den zeitlichen Verlauf eines digitalen mehrstufigen Pseudozufallssignals oder eines rauschänlichen Signals, das einen ähnlichen zeitlichen Verlauf wie ein mehrstufiges digitales Pseudorauschsignal hat, wenn dieses nach jedem Meßintervall für eine festlegbare Zeitdauer unterbrochen wird.

Wie später anhand eines konkreten Ausführungsbeispiels näher erläutert wird, kann die Hilfsgröße durch Umpolen und/oder Ab-bzw. Zuschalten eines konstanten Wertes erzeugt werden. Der Hilfsgrößengenerator (5) kann in diesem Fall aus einem oder mehreren Schaltern bestehen, mit denen die Referenzspannungen umgeschaltet werden.

Der Einsatz des erfindungsgemäßen Verfahrens oder der erfindungsgemäßen Vorrichtung kann auch anstelle von Trägerfrequenzmeßbrücken erfolgen. Hierbei wird die Eingangsgröße des Meßobjektes durch den umschaltbaren Hilfsgrößengenerator (5) erzeugt. Das Ausgangssignal des Meßobjekts wird als direkt zu messende Größe weiterverarbeitet, wobei die Synchrongleichrichtung der analogen Trägerfrequenz meßbrücke durch die digitale Meßwertverarbeitung im Prozessor (4) ersetzt wird.

Besteht das Meßobjekt aus einer Kapazität, einer Induktivität und/oder einem Widerstand, so kann die Hilfsgröße entweder ein Strom in das Meßobjekt oder die Spannung am Meßobjekt sein, wobei die direkt meßbare Größe ein Strom in dem Meßobjekt ist, falls die Hilfsgröße eine Spannung ist andernfalls handelt es sich bei der direkt meßbaren Größe um eine Spannung; aus den Meßwerten für die genannten Bauteile kann der komplexe Widerstand der Schaltung bestimmt werden. Bei gleicher Genauigkeit kann im Vergleich zu analogen Trägerfrequenzmeßbrücken mit Hilfe des erfindungsgemäßen Verfahrens und der erfindungsgemäßen Vorrichtung eine erheblich einfachere und damit preiswertere Meßsignalauswertung erfolgen.

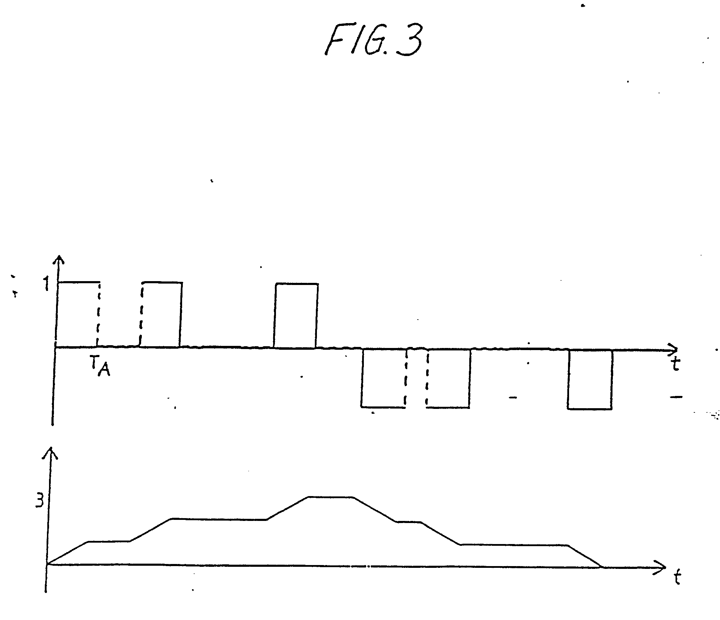

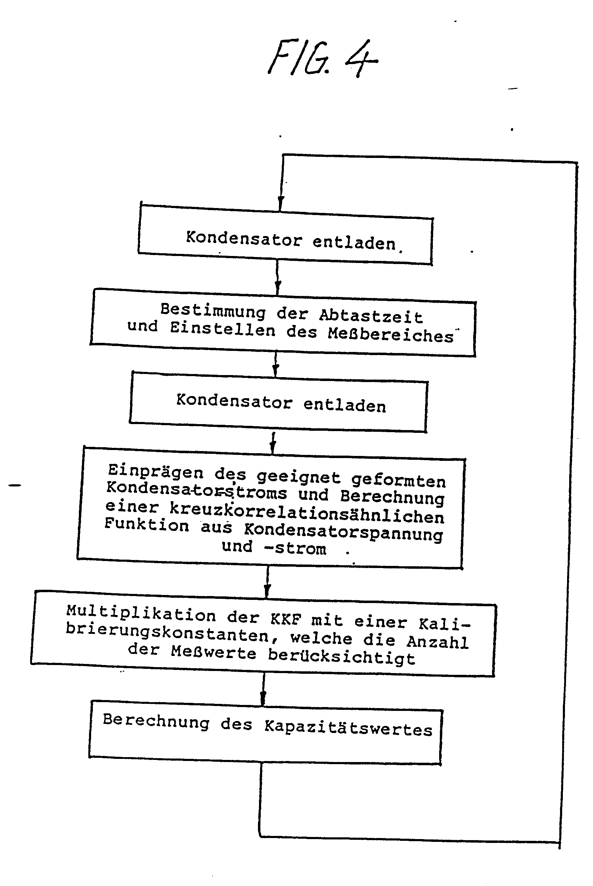

Besteht das Meßobject aus einem speichernden Bauelement wie einer Kapazität oder Induktivität, so wird vorteilhafterweise eine Hilfsgröße verwendet, wie sie in Fig. 3 dargestellt ist. Hierbei darf die Hilfsgröße einen nicht zu großen Offset aufweisen, damit der Wandlungsbereich des Analog/Digital-Wandlers nicht überschritten wird.

Um den Einfluß eines störenden Offsets der direkt zu messenden Größe auf das Meßergebnis zu eliminieren, wird das zur Steuerung des Hilfsgrößengenerators (5) vom Mikroprozessor abgegebene Steuersignal zur Berechnung der kreuzkorrelationsähnlichen Funktion verwendet. Darüber hinaus sollte die Meßgröße, insbesondere bei Analog/Digital-Wandlern mit positivem Wandlungsbereich, nur positive Werte annehmen, um zum einen den Wandlungsbereich des Analog/Digital-Wandlers möglichst gut auszunutzen und um andererseits den möglichen Wandlungsbereich des Analog/Digital-Wandlers nicht zu verlassen. Die letztgenannte Bedingung ist besonders wichtig bei der Messung von Elektrolytkondensatoren. Eine weitere Forderung besteht darin, die Hilfsgröße möglichst einfach zu realisieren.

Um den vorstehend genannten Forderungen gerecht zu werden und um außerdem eine maximale Störunterdrückung sowie eine einfache Programmierung des Mikroprozessors (4) zu ermöglichen, wird vorteilhafterweise ein zeitlicher Verlauf für die Hilfsgröße verwendet, wie er in Fig. 3 dargestellt ist. Die gestrichelt dargestellten Zeitabschnitte können zur Meßwertverarbeitung, d.h. für die Rechenzeit des Mikroprozessors (4) und die Wandlungszeit des Analog/Digitalwandlers (3) genutzt werden.

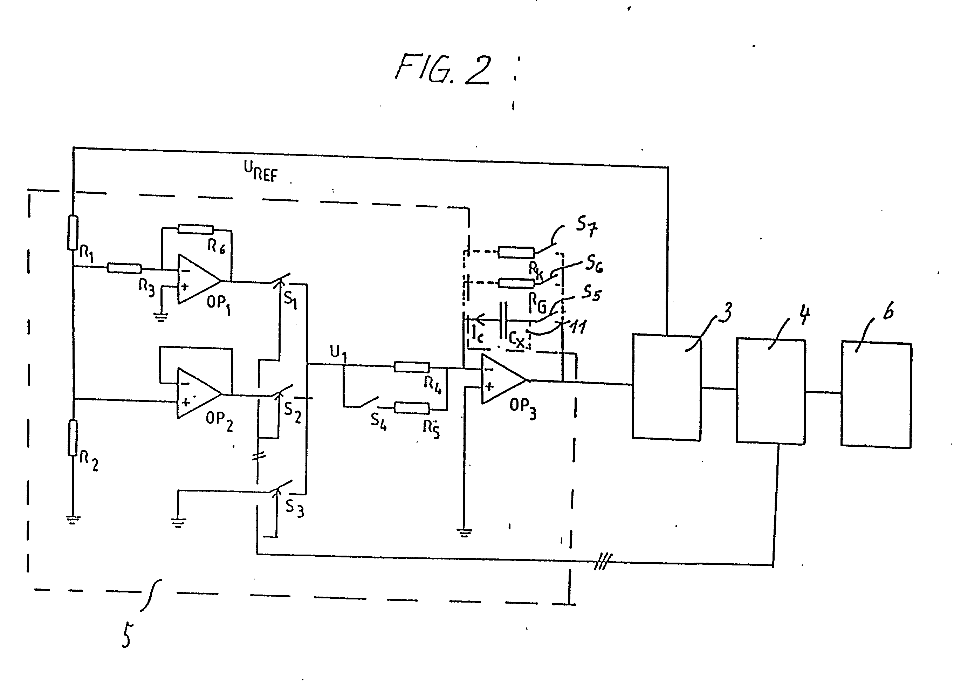

Neben dieser Ausgestaltung der Hiflsgröße kann das Ausgangssignal eines umschaltbaren Hilfsgrößengenerators (5), wie er nachstehend näher in Verbindung mit Fig. 2 erläutert wird, ein zeitdiskretes und/oder amplitudendiskretes Signal sein. Des weiteren kann die Hilfsgröße bei einem umschaltbaren Hilfsgrößengenerator (5) aus einer Folge von rechteckförmigen Impulsen unterschiedlicher Zeitdauer und/oder unterschiedlicher Amplituden bestehen. Eine weitere Möglichkeit besteht darin, das Ausgangssignal des umschaltbaren Hilfsgrößengenerators (5) als digitals, mehrstufiges Pseudozufallsignal oder als rauschähnliches Signal auszuführen, das einen ähnlichen Verlauf wie ein mehrstufiges, digitales Pseudorauschsignal hat, wenn dieses nach jedem Abtastintervall für ein festes oder variables Zeitintervall unterbrochen wird.

Schließlich kann die Hilfsgröße aus einem rauschähnlichen Signal bestehen, welches einen zeitlichen Verlauf hat wie ein mehrstufiges, digitales Pseudorauschsignal maximaler Länge minimaler Dauer, wenn dieses nach jedem Meßintervall für ein festes oder variables Zeitintervall unterbrochen wird. Pseudozufällige, digitale Rauschsignale mit m Amplitudenstufen können mit Hilfe von rückgekoppelten n-stufigen Schieberegistern mit m Amplitudenquantisierungsstufen gewonnen werden. Bei geeigneter Rückkopplung des Schieberegisters ergeben sich periodische Pseudorauschsignale mit der maximalen Periodendauer (Länge) $m^n - 1$. Wird zusätzlich n sinnvoll minimiert, so ergeben sich pseudozufällige, digitale Rauschsignale maximaler Länge und minimaler Dauer; für $m = 3$, d.h. drei Amplitudenstufen ist $n = 2$ zu wählen.

Erzeugt werden kann diese Hilfsgröße durch Umpolen und/oder Ausschalten einer konstanten Hilfsgrößenamplitude.

Ist die Hilfsgröße nicht bekannt, so kann sie durch eine Messung ausreichend genau bestimmt werden.

Anhand des in Fig. 2 dargestellten Blockschaltbildes zur Kapazitätsmessung soll eine Anwendung des erfindungsgemäßen Verfahrens mit einem umschaltbaren Hilfsgrößengenerator in Verbindung mit der zeitlichen Darstellung des Kondensatorstromes und der Kondensatorspannung gemäß Fig. 3 näher erläutert werden. Bei der in Fig. 2 dargestellten Schaltungsanordnung dient als Hilfsgröße ein Kondensatorstrom, der durch die aus den Widerständen (R4, R5) und dem Verstärker (OP3) bestehende spannungsgesteuerte Konstantstromquelle erzeugt wird.

An dem im Hilfsgrößengenerator (5) enthaltenen Spannungsteiler (R1), (R2) wird eine aus dem Analog/Digital-Wandler (3) herausgeführte Referenzspannung $U_{REF}$ angelegt, die mittels des Spannungsteilers so geteilt wird, daß die Amplitude der Spannung U1 am Amplitudenschaltglied (R4, R5) sowie Schalter (S4) einen gewünschten Wert annimmt. Die Verbindung der beiden Widerstände (R1, R2) des Spannungsteilers wird über einen Widerstand (R3) an den invertierenden Eingang eines als Inverter geschalteten Operationsverstärkers (OP1) angelegt, dessen nichtinvertierender Eingang mit Masse oder Bezugspotential verbunden ist und dessen Ausgang über einen Widerstand (R6) auf den invertierenden Eingang rückgekoppelt ist. Der Operationsverstärker (OP1) stellt die negative Amplitude der Spannung U1 bereit. Der als Elektrometerverstärker geschaltete Operationsverstärker (OP2) vermeidet die Belastung des Spannungsteilers durch die positive Amplitude der Spannung U1 und stellt deren positiven Amplitudenwert bereit.

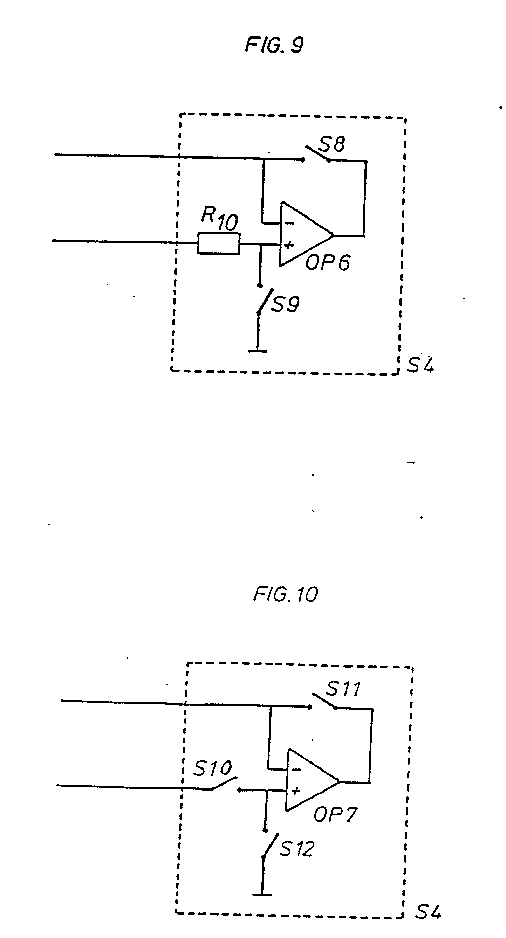

Die Ausgänge der beiden Operationsverstärker (OP1, OP2) sind an die Schalter (S1, S2) angeschlossen, die zusammen mit einem weiteren Schalter (S3) als Analogschalter ausgeführt sind. Sie werden vom Mikropozessor (4) mittels der zuvor erwähnten Steuersignal so angesteuert, daß die Spannung U1 und somit auch der am Ausgang der spannungsgesteuerten Konstantstromquelle (R4, R5) und (OP3) anstehende Kondensatorstrom den gewünschten, in Fig. 3 dargestellten zeitlichen Verlauf annimmt. Durch die Widerstände (R4) und (R5) des Amplitudenschaltgliedes werden die möglichen Amplituden des Kondensatorstromes festgelegt, während sie mittels des Schalters (S4) umgeschaltet werden können. Hierzu ist der Schalter (S4) vorzugsweise gemäß Fig. 9 oder 10 auszuführen, damit der so realisierte Analogspannungsschalter im eingeschalteten Zustand nahezu keinen Spannungsabfall aufweist.

Die Ausgangsspannung des Operationsverstärkers (OP3) der spannungsgesteuerten Konstantstromquelle wird dem Analog/Digital-Wandler (3) zugeführt, wobei es sich bei der so gemessenen Spannung nicht um die Kondensatorspannung sondern um die Summe aus Kondensatorspannung und Offsetspannung des Operationsverstärkers (OP3) handelt. Ist diese Offsetspannung konstant, das ist der Fall solange der Operationsverstärker (OP3) seinen linearen Bereich nicht verläßt, so hat sie keinen Einfluß auf das Meßergebnis für die unbekannte Kapazität Cx.

Verwendet man die Referenzspannung des Analog/Digital-Wandlers zur Erzeugung des Kondensatorstromes, wie es in Fig. 2 dargestellt ist, so haben Schwankungen dieser Spannung ebenfalls keinen Einfluß auf daß Meßergebnis.

Das Meßobjekt Cx kann über einen Schalter (S5) zwischen den Ausgang des Operationsverstärkers (OP3) und dessen invertierenden Eingang geschaltet werden. Alternativ können die Präzisionswiderstände (RG) und (RK) in die Rückführung des Operationsverstärkers (OP3) geschaltet werden, um durch eine Messung der Stromamplitude das Meßgerät zu kalibrieren. Die Präzisionswidersände (RG) und (RK) können in das Meßgerät integriert werden, um dieses vor jeder Messung automatisch zu kalibrieren. Hierdurch werden Auswirkungen von Bauteileschwankungen aufgrund von Temperatur und Zeit eliminiert, so daß keine hohen Genauigkeitsanforderungen an die Widerstände (R1) bis (R5) des Hilfsgrößengenerators (5) gestellt werden müssen.

Nachstehend soll die Funktionsweise der Schaltungsanordnung gemäß Fig. 2, in Verbindung mit der Darstellung des zeitlichen Verlaufes des Kondensatorstromes und der Kondensatorspannung, wenn der Strom während der Analog/Digital-Wandlung und der Berechnung der kreuzkorrelationsähnlichen Funktion unterbrochen wird, erläutert werden.

Zu Beginn der Messung wird die zu messende Kondensatorspannung, durch Beaufschlagen der Kapazität mit entsprechenden Strompulsen auf einen kleinen, positiven Wert eingestellt. Sie wird nicht auf "Null" eingestellt, damit kleine negative Offsetströme nicht zu negativen Spannungen führen können. Damit die zu wandelnde Spannung den Wandlungsbereich des ADC möglichst gut ausnutzt, sollte ihr maximaler Wert etwas kleiner als die Referenzspannung sein. Um das zu erreichen, wird die Dauer der einzelnen Strompulse $T_A$ an die zu messende Kapazität angepaßt. Dazu werden so lange Strompulse der minimalen Dauer $T_{A\,MIN}$ in die Kapazität eingeprägt, bis die zu messende Spannung ein Viertel der Referenzspannung erreicht hat. Aus der Anzahl Z dieser Strompulse wird die Zeit $T_A$ bestimmt:

$$T_A = Z \cdot T_{A\,MIN} \qquad (1)$$

So ist gewährleistet, daß die maximal zu messende Spannung etwa 75 % der Referenzspannung beträgt. Die restlichen 25 % erlauben die Messung gestörter Spannungen.

Falls die Anzahl Z der Strompulse so groß wird, daß die Meßzeit eine Sekunde überschreiten würde, so wird die Stromamplitude mittels Schalter (S4) auf einen größeren Wert umgeschaltet und die Anzahl Z neu ermittelt.

Zur Bestimmung des Kapazitätswertes geht man von einem aus der Systemidentifikation bekannten Ansatz aus:

$$\phi_{iu}(\tau) = g(\tau)^* \phi_{ii}(\tau) \qquad (2)$$

$\phi_{iu}(\tau)$ ist die Kreuzkorrelationsfunktion (KKF) zwischen Kondensatorstrom und Kondensatorspannung,

$g(\tau)$ ist die Gewichtsfunktion (Impulsantwort),

$\phi_{ii}(\tau)$ ist die Autokorrelationsfuktion (AKF) des Kondensatorstromes,

"*" steht für das Faltungsintegral.

Berücksichtigt man nur die in Fig. 2 durchgezogen gezeichneten Teile des Kondensatorstroms, so handelt es sich bei dessen AKF um eine periodische Folge positiver und negativer Dirac-Impulse. Berücksichtigt man außerdem, daß die KKF einen periodischen Verlauf hat und entweder einen positiven oder einen gleich großen negativen Wert annimmt, so ergibt sich unter Beachtung des bekannten Zusammenhangs zwischen $g(\tau)$ und der Kapazität der folgende Zusammenhang:

$$C_x = \frac{1}{2} \cdot \frac{\phi_{ii}(-4T_A) \cdot T_A}{\phi_{iu}(\tau)} \qquad ; \quad -3T_A \leqslant \tau \geqslant 0 \qquad (3)$$

Ermittelt man die KKF für negative Verschiebungen, so kann sie aus so vielen Meßwerten bestimmt werden, wie einer Periode des Kondensatorstromes ent sprechen. Man benötigt also keine weiteren Meßwerte, um die Verschiebungen durchzuführen. Hierbei kompensiert sich der Vorzeichenwechsel in der KKF mit dem in der AKF. Man spart somit Zeit gegenüber der Ermittlung der KKF für positive Verschiebungen, weil der Kondensatorstrom als bekannt angenommen wird.

Da der Kondensatorstrom nur die Werte $+\hat{i}_c$, $-\hat{i}_c$ und Null annehmen kann, läßt sich die Kreuzkorrelation auf Additionen und Subtraktionen zurückführen.

Der Kondensatorstrom kann durch die Folge (4) für eine Periode beschrieben werden

$$I_C = \hat{i}_c \bullet \{1,1,0,1,-1,-1,0,-1\} . \qquad (4)$$

Der Wert der zu messenden Kapazität $C_x$ kann aus einer Konstanten $K_O$, die u.a. den festen Wert der AKF beinhaltet, sowie aus der Abtastzeit $T_A$ und dem Wert der KKF $\phi_{xy}(\tau)$ bestimmt werden:

$$C_x = K_O \cdot \frac{T_A}{\phi_{xy}(\tau)} \qquad ; \quad 0 \leqslant \tau \geqslant 3T_A \qquad (5)$$

In dem hier beschriebenen Ausführungsbeispiel wurde zur Bestimmung der Kapazität Cx in Gleichung (5) die Funktion $\phi_{xy}(\tau)$ durch ihren Mittelwert für die Verschiebungen $\tau = 1$ und 3 ersetzt.

Die Funktion $\phi_{xy}(\tau)$ kann übersichtlich aus einer Tabelle ermittelt werden:

| X(t) | Y(t+τ) | | | |
|---|---|---|---|---|
| | $\tau=0$ | $\tau=1$ | $\tau=2$ | $\tau=3$ |
| XO | 1 | 1 | 0 | 1 |
| X1 | 1 | 0 | 1 | -1 |
| X2 | 0 | 1 | -1 | -1 |
| X3 | 1 | -1 | -1 | 0 |
| X4 | -1 | -1 | 0 | -1 |
| X5 | -1 | 0 | -1 | 1 |
| X6 | 0 | -1 | 1 | 1 |
| X7 | -1 | 1 | 1 | 0 |

## Tabelle 1: Bestimmung der kreuzkorrelationsähnlichen Funktion

Aus Tabelle 1 folgt für $\phi_{xy}(\tau)$:

$\phi_{xy}(\tau=0) = XO + X1 + X3 - X4 - X5 - X7$

$\phi_{xy}(\tau=1) = XO + X2 + X7 - X3 - X4 - X6$

$\phi_{xy}(\tau=2) = X1 + X6 + X7 - X2 - X3 - X5$

$\phi_{xy}(\tau=3) = XO + X5 + X6 - X1 - X2 - X4 \qquad (6)$

Diese Werte der Funktion $\phi_{xy}(\tau)$ sind untereinander gleich. Auf die Ermittlung der Funktion $\phi_{xy}(\tau)$ für weitere $\tau$ Werte wird verzichtet, da es sich um eine periodische Funktion handelt.

Wie man aus Tabelle 1 in Verbindung mit Gleichung (6) erkennt, verändert ein Offset, welcher den Werten Xi überlagert sein könnte, das Meßergebnis nicht.

Falls die beiden Amplituden der Spannung $U_1$ nicht gleich groß sind, so führt das zu einem Offset welcher in der gemessenen Spannung aufintegriert wird und der somit einen zeitlich linear verlaufenden Störanteil der direkt zu messenden Größe dar stellt. Dieser lineare Teil ist leicht zu beschreiben, wenn man zu den Xi in Tabelle jeweils den Wert i•K addiert.

Als Abweichung gegenüber Gleichung (6) ergibt sich:

$\Delta\phi_{xy}(\tau=0) = 1 + 3 - 4 - 5 - 7 = \quad -12$

$\Delta\phi_{xy}(\tau=1) = 2 + 7 - 3 - 4 - 6 = \quad -4$

$\Delta\phi_{xy}(\tau=2) = 1 + 6 + 7 - 2 - 3 - 5 = 4$

$\Delta\phi_{xy}(\tau=3) = 5 + 6 - 1 - 2 - 4 = \quad 4 \qquad (7)$

Falls die mit Fi bezeichneten Digitalisierungsfehler des ADC im Bereich von 0 bis +1 LSB liegen, so ergeben sich gegenüber Gleichung (6) folgende Abweichungen, wobei berücksichtigt ist, daß X1, X6 und X7 sowie X2, X3 und X5 im ungestörten Fall untereinander gleich sind.

$\Delta\phi_{xy}(\tau=0) = F0 + F1 + F3 - F4 - F5 - F7 = F0 - F4$

$\Delta\phi_{xy}(\tau=1) = F0 + F2 + F7 - F3 - F4 - F6 = F0 - F4$

$\Delta\phi_{xy}(\tau=2) = F1 + F6 + F7 - F2 - F3 - F5$

$\Delta\phi_{xy}(\tau=3) = F0 + F5 + F6 - F1 - F2 - F4 = F0 - F4 \qquad (8)$

Wie Gleichung (8) zeigt, ist der Fehler an den Stellen $\tau = 0, 1, 3$ gleich und beträgt maximal +/-1 LSB. An der Stelle $\tau = 2$ beträgt er maximal +/-3 LSB. Um die Auswirkung von Digitalisierungsfehlern zu minimieren, wird eine Mittelung zur Elimination eines linearen Störanteils nur aus den Werten der kreuzkorrelationsähnlichen Funktion an den Verschiebungen $\tau = 1$ und $\tau = 3$ durchgeführt. Falls der Digitalisierungsfehler +/-1/2 LSB beträgt, so kann er durch addieren von +1/2 LSB in den Bereich von 0 bis +1 LSB transferiert werden. Die Auswirkungen eines linearen Störanteils auf das Meßergebnis werden ebenfalls eliminiert, wenn er einen mit steigender Zeit fallenden Verlauf hat.

Die Genauigkeit des erfindungsgemäßen Kapazitätsmeßgerätes wird im wesentlichen durch die Auflösung des ADC und die Genauigkeit der Widerstände bestimmt. Die hohen Genauigkeitsanforderungen an die Widerstände (R1) bis (R6) können entfallen, wenn eine Kalibrierung mit einem Meßwiderstand erfolgt, indem die Stromamplitude mit Hilfe dieses Meßwiderstandes gemessen wird. Der Meßwiderstand kann in das Meßgerät integriert werden, um so das Meßgerät vor jeder Messung automatisch zu kalibrieren. Hierdurch werden auch die Auswirkungen von Bauteileschwankungen, aufgrund von Temperatur und Zeit eliminiert.

In diesem Ausführungsbeispiel wurden die Auswirkungen dieser Veränderungen durch Kaibrierung auf eine Normkapazität kompensiert.

Die Fehler in der Zeit $T_A$ können vernachlässigt werden, wenn ein genauer Quarz zur Taktung der Recheneinheit verwendet wird. Falls der zu messenden Spannung so große Störungen überlagert sind, daß der Wandlungsbereich des ADC überschritten wird, so wird dieser Fehler erkannt und die Messung neu gestartet. Da die Unterdrückung der Auswirkungen von eingestreuten Störungen und die Elimination von Offsetauswirkungen nicht nur bei der Kapazitätsmessung, sondern auch bei allen anderen Messungen, bei denen die zu bestimmende Größe mit Hilfe einer geeignet geformten Hilfsgröße ermittelt wird, auftritt, hat man somit eine Anordnung zur Messung fast aller elektrischen und nichtelektrischen Größen, die eine sehr gute Störunterdrückung gewährleistet. Außerdem wird in den Fällen, wo ein Offset aufintegriert wird, der Einfluß des entstehenden linearen Anteils auf das Meßergebnis eliminiert.

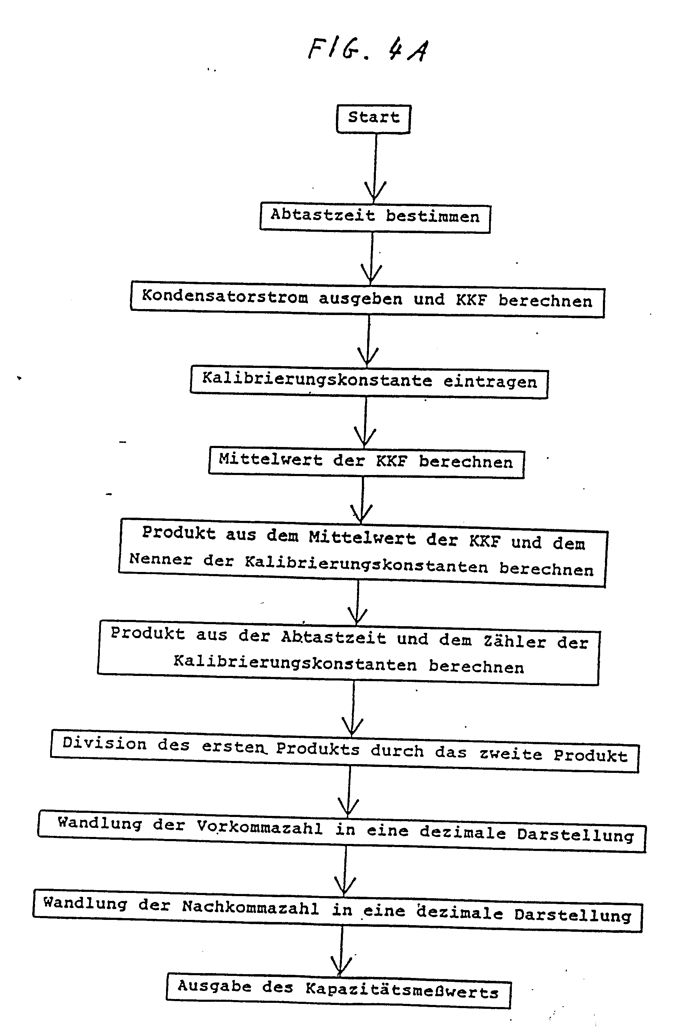

Zur Erzeugung des gewünschten Kondensatorstromes müssen die Schalter (S1) bis (S3) mittels der vom Mikroprozessor (4) abgegeben Steuersignale in geeigneter Weise gesteuert werden. Darüber hinaus muß die kreuzkorrelationsähnliche Funktion zwischen den Meßwerten der Kondensatorspannung und den Sollwerten des Kondensatorstromes bestimmt werden, um daraus den Kapazitätswert zu berechnen. Die hierzu benötigte Software ist in dem Flußdiagramm gemäß Fig. 4 dargestellt, wobei nach dem Reset-Vorgang das Steuerprogramm CBEST (Fig. 4A) zuerst das Programm ABTAST (Fig. 4B) aufruft. Dieses initiiert seinerseits das Entladen des Kondensators und das Bestimmen seines Spannungswertes, indem es das Programm ENTLADEN (Fig. 4C) aufruft. Danach adaptiert es die Abtastzeit an den zu messenden Kondensator und übergibt den eingestellten Meßbereich sowie die ermittelte Abtastzeit an das Steuerprogramm CBEST (Fig. 4A).

Dieses startet nun die Routine KKFC (Fig. 4D) und übergibt ihr den eingestellten Meßbereich und die adaptierte Abtastzeit. Die Routine KKFC steuert die Stromquelle so, daß ein gewünschter Strom in den Kondensator fließt und kontrolliert die Analog/Digital-Wandlungen. Außerdem berechnet es die kreuzkorrelationsähnliche Funktion zwischen den Sollwerten des Kondensatorstromes und den Meßwerten der Kondensatorspannung.

Nachdem die kreuzkorrelationsähnliche Funktion aus 160 Meßwerten bestimmt wurde, berechnet das Steuerprogramm CBEST mit Hilfe von Arithmetikprogrammen den Kapazitätswert. Bevor der Meßzyklus erneut beginnt, übergibt das Steuerprogramm CBEST den Kapazitätsmeßwert an ein Ausgabeprogramm, welches diesen Meßwert zur Anzeige bringt. Mit dem in Fig. 4A dargestellten Steuerprogramm CBEST wird die Stellung der Schalter (S1) bis S3 gesteuert, die Kondensatorspannung gemessen und der Kapazitätswert berechnet. Um den Ablauf übersichtlicher zu gestalten, ist es als Steuerprogramm ausgeführt, wobei die eigentlichen Funktionen in Unterprogrammen ausgeführt werden.

Eines dieser Unterprogramme besteht aus dem Programm ABTAST gemäß Fig. 4B mit dem die Abtastzeit und der Kapazitätsbereich bestimmt wird. Ein weiteres Unterprogramm ist das Programm ENTLADEN gemäß FIG. 4C, mit dessen Hilfe die Kapazität entladen wird.

Durch das Programm KKFC gemäß Fig. 4D wird der Kondensatorstrom in gewünschter Form gesteuert und die kreuzkorrelationsähnliche Funktion berechnet. Die weiteren Unterprogramme sind nicht näher dargestellt worden, da es sich um übliche Subtraktions-, Additions-, Multiplikations-und Divisionsprogramme handelt.

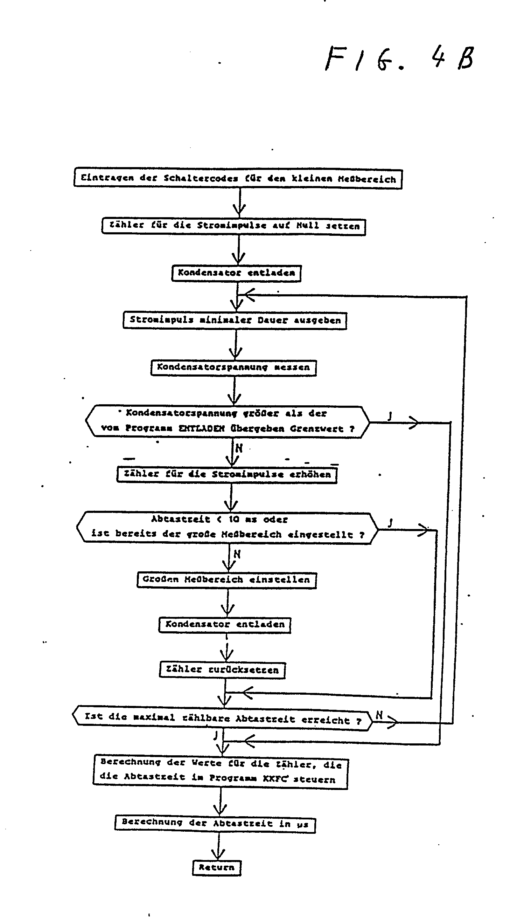

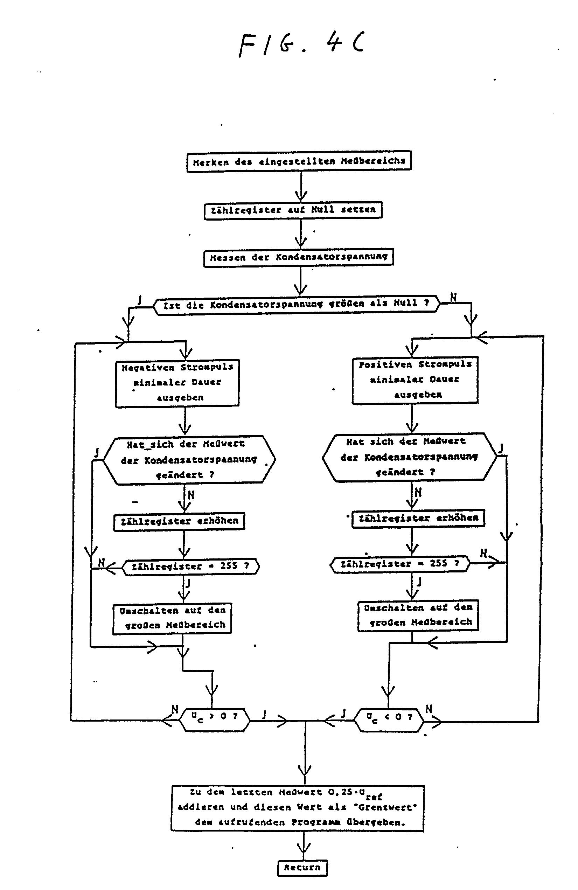

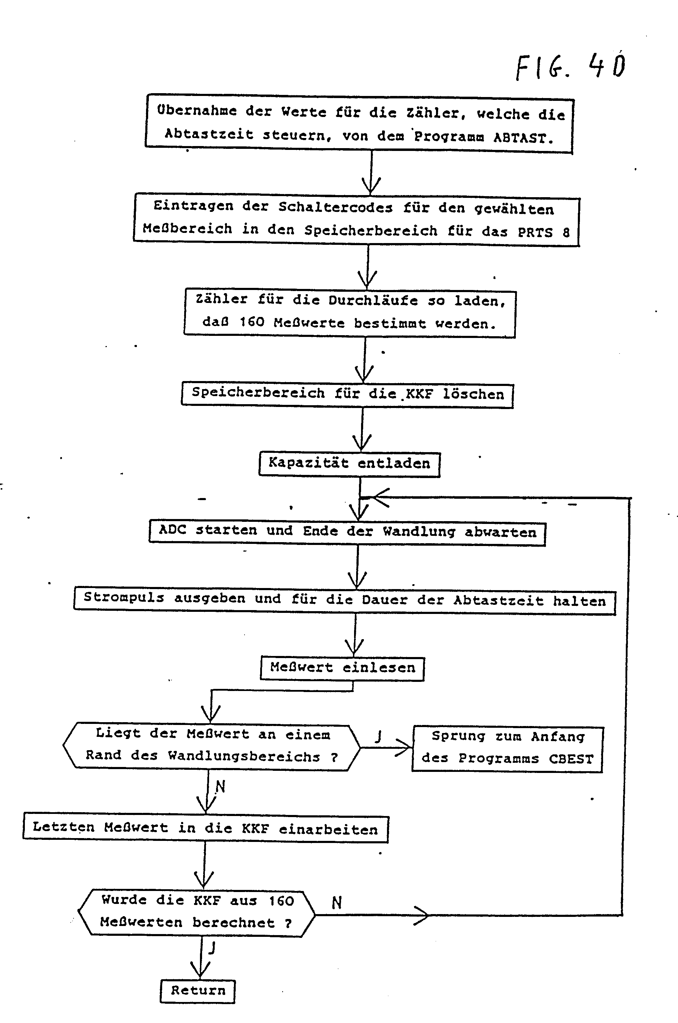

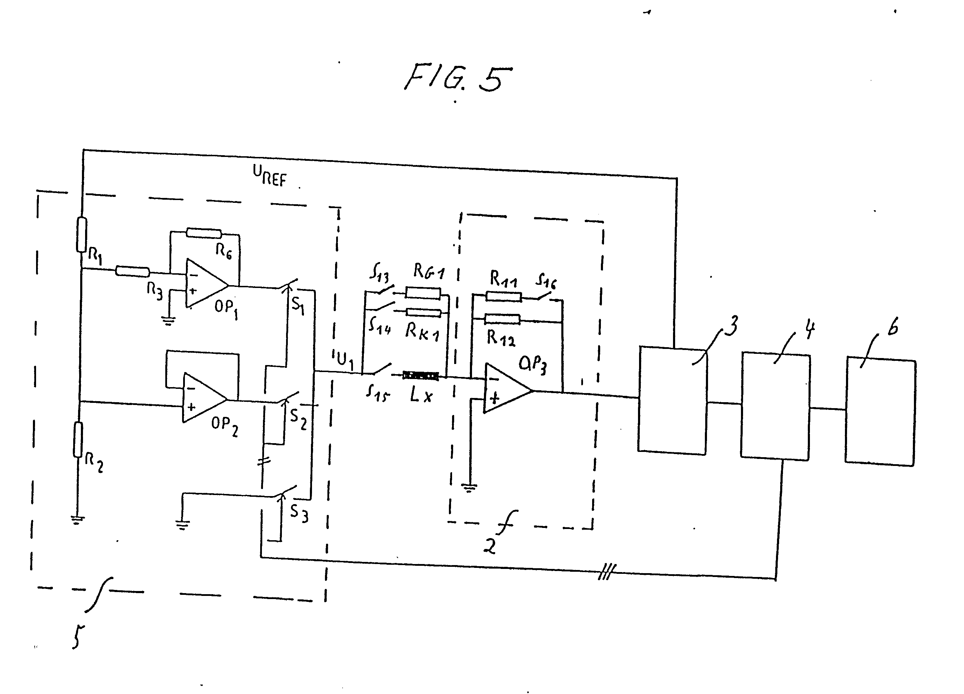

Fig. 5 zeigt als weiteres Ausführungsbeispiel das Blockschaltbild einer Schaltung zur Bestimmung einer unbekannten Induktivität Lx, das analog zum Blockschaltbild gemäß Fig. 1 und 2 einen Analog/Digital-Wandler (3), einen Mikroprozessor (4) sowie eine Anzeigeeinrichtung (6) enthält.

Der Hilfsgrößengenerator (5) weist ebenfalls einen Spannungsteiler (R1, R2) auf, an den die aus dem Analog/Digital-Wandler (3) herausgeführte Referenzspannung $U_{ref}$ angelegt ist. Der invertierende Eingang eines ersten Operationsverstärkers (OP1) ist über einen Widerstand (R3) an die Verbindung der beiden Spannungsteilerwiderstände (R1, R2) angeschlossen und über einen Widerstand (R6) mit dem Ausgang des Operationsverstärkers (OP1) verbunden. Der nichtinvertierende Eingang des ersten Operationsverstärkers ist an Masse-bzw. Bezugspotential angeschlossen. Ein zweiter Operationsverstärker (OP2) ist analog zur Schaltungsanordnung gemäß Fig. 2 als invertierender Verstärker mit der Verstärkung "1" geschaltet, wobei sein invertierender Eingang an die Verbindung der beiden Spannungsteilerwiderstände (R1, R2) angeschlossen und sein invertierender Eingang mit seinem Ausgang verbunden ist. Drei als Analogschalter angeordnete Schalter (S1, S2, S3) von denen der letztgenannte Schalter (S3) mit Masse-oder Bezugspotential verbunden ist, werden mittels der vom Mikroprozessor (4) abgegebenen Steuersignale in zuvor beschriebener Weise angesteuert.

Die Schalter (S1) bis (S3) sind mit dem Meßobjekt Lx verbunden, dessen anderer Anschluß an den invertierenden Eingang des Operationsverstärker (OP3) angeschlossen ist. In der Rückführung des Operationsverstärkers (OP3) befinden sich die Widerstände (R11, R12), die zusammen mit dem Schalter (S13) ein Amplitudenschaltglied bilden. Die Widerstände (Rg1) und (Rk1) dienen der Kalibrierung.

Eine spezielle Verrechnung der Werte der kreuzkorrelationsähnlichen Funktion oder der Kreuzkorrelationsfunktion kann bei der Messung von speichernden Meßobjekten entfallen, wenn das Meßsignal bzw. die direkt zu messende Größe keinen linearen Anteil enthält, der zu Meßfehlern führen würde.

Da bei der Widerstandsmessung die kreuzkorrelationsähnliche Funktion im Idealfall im betrachteten Bereich nur aus einem Wert besteht, der ungleich "Null" ist, kann eine Mittelung der Funktionswerte entfallen.

Falls die Struktur eines Netzwerkes aus Widerständen, Kapazitäten und Induktivitäten bekannt ist, so kann man aufgrund allgemein bekannter Zusammenhänge auch den Gesamtwiderstand, die Gesamtinduktivität, die Gesamtkapazität sowie den komplexen Widerstand des Netzwerkes bestimmen.

Bei der Verwendung der Schaltung zur Spannungs-und Strommessung wird eine zu messende Gleichspannung so umgepolt und ausgeschaltet, daß die Spannung im Meßgerät den oben beschriebenen Verlauf annimmt. Diese Spannung kann nun direkt dem Analog/Digital-Wandler (3) zugeführt werden. Um sehr kleine Gleichspannungen oder Ströme zu messen, kann die zu messende Spannung über einen Widerstand und einen Umkehrintegrator einen Strom in die bekannte Kapazität des Integrators einprägen, wobei dann die Kondensatorspannung oder eine damit zusammenhängende Spannung analog/digital gewandelt wird; ein zu messender Strom kann direkt aufintegriert werden. Die Messung von Wechselspannungen kann beispeilsweise so durchgeführt werden, daß man sie gleichrichtet und dann die Gleichspannung mißt. Die Strommessung kann z.B. über einen Widerstand auf eine Spannungsmessung zurückgeführt werden.

Wie allgemein bekannt ist, wirkt auf ein geladenes Teilchen im elektrischen Feld und falls das Teilchen bewegt wird auch im magnetischen Feld, ein Kraft. Über die Gestaltung des elektrischen bzw. magne tischen Feldes hat man die Möglichkeit, die Vorrichtung auch zur Messung der durch diese Felder hervorgerufenen Effekte und daraus ableitbaren Größen einzusetzen.

Ein Beispiel hierfür ist die magnetisch-induktive Durchflußmessung. Hierbei kann das Magnetfeld nach dem oben beschriebenen zeitlichen Verlauf gesteuert werden. Ein weiteres Anwendungsbeispiel ist die Durchflußmessung, bei der die Hilfsgröße eine Spannung und/oder eine elektrische Feldstärke ist, welche Teilchen die ionisiert und/oder polarisiert sein können, polarisiert, ionisiert, ausrichtet und/oder ablenkt, so daß als Meßsignal oder direkt zu messende Größe eine Spannung, Ladung, elektrische Wirkleistung, Feldstärke und/oder Kapazitätsänderung auftritt, die vom Durchfluß abhängt.

Viele nichtelektrische Größen, wie z.B. geometrische Größen oder Größen die Änderungen der Dielektrizitätskonstanten, der spezifischen Leitfähigkeit oder der Permeabilitätszahl bewirken, können über die Änderungen eines elektrischen Feldes oder eines Magnetfeldes und damit auch über die Bestimmung von Kapazitäten, Widerständen oder Induktivitäten ermittelt werden. Wegen der hohen Auflösung und Genauigkeit des erfindungsgemäßen Meßverfahrens, können auch Sensoren realisiert werden, bei denen das elektrische oder magnetische Feld (teilweise) räumlich außerhalb des Sensorelements liegt; es können auch elektrische oder magnetische Änderungen von Streufeldern als Meßeffekt ausgenutzt werden.

Eine weitere Anwendung der Erfindung ergibt sich bei der Magnetfeldmessung mittels Hallsensoren, wobei der Strom, welcher das Hallelement durchfließt, in der oben beschriebenen Form ausgeführt werden kann.

Auch bei der Durchflußmessung nach dem Coriolis-Verfahren kann die vorstehend beschriebene Vorrichtung eingesetzt werden, wobei es zwei Einsatzmöglichkeiten gibt. Zum einen kann die mechanische Schwingung, welche die Coriolis-Kraft erzeugt, den oben beschriebenen zeitlichen Verlauf aufweisen, zum anderen kann der Kraftaufnehmer nach dem oben beschriebenen Verfahren ausgeführt werden, beispielsweise kann der Strom in einem Dehnungsmeßstreifen als Hilfsgröße betrachtet und in entsprechender Weise ausführt werden. Die beiden Einsatzmöglichkeiten können selbstverständlich kombiniert werden.

Ein wesentlicher Vorteil des erfindungsgemäßen Verfahrens sowie der Vorrichtung zur Durchführung des Verfahrens besteht in der einfachen und preiswerten Realisierung eines Meßgerätes mit sehr hoher Genauigkeit.

Bei der beanspruchten Vorrichtung treten nicht die Nachteile der bekannten Brückenschaltungen auf, da erstens kein Abgleich erforderlich ist und zweitens keine sinusförmigen Verläufe der Hilfsgröße verwendet werden müssen. Die Probleme der Frequenzstabilisierung treten praktisch nicht auf, da die notwendigen, verschiedenen Zeitdauern quarzgenau bestimmt werden können. Falls in der direkt zu messenden Größe bzw. dem Meßsignal ein Offset und/oder ein linearer Störanteil auftritt, so werden deren Auswirkungen auf das Meßergebnis eliminiert. Das bedeutet, daß die Hilfsgrößen nicht absolut mittelwertfrei sein müssen und daß die Hilfsgrößengenerator daher kostengünstig realisierbar sind. Ein weiterer Vorteil der erfindungsgemäßen Lösung besteht darin, daß keine langen Meßzeiten auftreten, da die Amplitude der Hilfsgröße an das Meßobjekt adaptierbar ist. Zusätzlich ist gewährleistet, daß die Auswirkungen von einstreuenden Störgrößen auf das Meßergebnis stark unterdrückt werden.

Selbst von der Schaltung verursachte Störungen der direkt zu messenden Größe bzw. des Meßsignals, welche den gleichen Verlauf wie die Hilfsgröße haben, verfälschen das Meßergebnis bei speichernden Meßobjekten nicht.

Aufgrund der großen Anzahl an Meßwerten, die zur Bestimmung der indirekt zu messenden Größe verwendet werden, sind die Auswirkungen von Digitalisierungsfehlern der Meßinstanz durch deren Mittelung minimiert.

Da die eigentliche Bestimmung der zu messenden Größe digital erfolgt, können die Werte der Leitungen zwischen Meßgerät und Meßobjekt vor der eigentlichen Messung bestimmt werden, um sie später automatisch zu berücksichtigen.

Aufgrund der geringen Anzahl der verwendeten Bauelemente, bei denen es sich zusätzlich um häufig verwendete und damit preiswerte Teile handelt, können preiswerte Meßgeräte hergestellt werden, deren Genauigkeit im Bereich der von Trägerfrequenzmeßbrücken liegt. Da die Genauigkeit fast ausschließlich von der Auflösung des Analog/Digital-Wandlers und der Genauigkeit der Kalibrierungswiderstände abhängt, läßt sie sich darüber hinaus in sehr einfacher Weise steigern.

Zusätzlich ist die Anordnung miniaturisierbar und kann somit in Sensoren integriert werden. Da in der Anordnung ein Mikroprozessor enthalten ist, ist sie prädestiniert für eine Anwendung in intelligenten Sensoren.

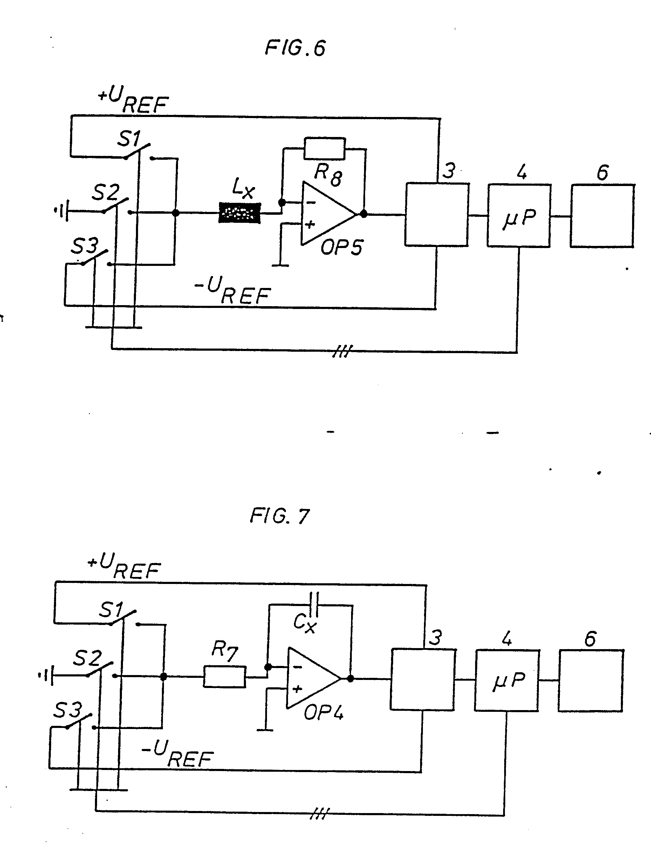

In Fig. 6 und 7 sind vereinfachte Schaltungsanordnungen zur Induktivitäts-und Kapazitätsbestimmung dargestellt, die unter bestimmten Voraussetzungen die Vorrichtungen gemäß den Fig. 2 und 5 ersetzen können. Hierzu ist lediglich erforderlich, daß der Analog/Digital-Wandler (3) sowohl eine positive als auch eine negative Referenzspannung $+U_{REF}$'-$U_{REF}$ abgibt. In diesem Fall kann der erste Verstärker (OP1) entfallen. Der Spannungsteiler mit den Spannungsteilerwiderständen (R1, R2) ist oftmals nicht erforderlich, wodurch ebenfalls der Trennverstärker (OP2) entfallen kann.

Daraus ergibt sich die in Fig. 6 dargestellte Schaltungsanordnung zur Induktivitätsbestimmung, bei der an einen ersten Schalter (S1) eine positive Referenzspannung $+U_{REF}$ und an einen dritten Schalter (S3) eine negative Referenzspannung $-U_{REF}$ angelegt wird, die vom Analog/Digital-Wandler (3) abgegeben werden. An einem zweiten Schalter (S2) liegt Masse bzw. Bezugspotential.

Die Schalter (S1) bis (S3) werden analog den vorstehend beschriebenen Ausführungsbeispielen über vom Mikroprozesor (4) abgegebene Steuersignale angesteuert und legen entsprechende Spannungen an die Induktivität Lx, deren Ausgangs-Meßsignale vom Analog/Digital-Wandler (3) erfaßt und an den Mikroprozessor (4) weitergeleitet werden, der nach der vorstehend beschriebenen Berechnung die Meßgröße auf dem Anzeigegerät (6) zur Anzeige bringt. Der in Fig. 6 vorgesehene Widerstand (R8) dient dabei als Strommeßwiderstand.

Analog zur vereinfachten Schaltungsanordnung gemäß Fig. 6 kann unter den oben beschriebenen Voraussetzungen eine vereinfachte Schaltungsanordnung zur Kapazitätsbestimmung gemäß Fig. 7 vorgesehen werden, wobei die zu messende Induktivität Lx und der Strommeßwiderstand (R8) durch eine Konstantstromquelle bestehend aus dem Widerstand (R7) und dem Operationsverstärker (OP4) und die zu bestimmende Kapazität Cx ersetzt werden.

## Ansprüche

1. Verfahren zur Messung der Meßgröße eines Meßobjektes, an das eine Hilfsgröße angelegt wird und das mit einem Meßwertaufnehmer oder Sensorelement gekoppelt ist, der ein der Meßgröße entsprechendes, direkt meßbares, analoges oder digitales Meßsignal abgibt, wobei aus der Hilfsgröße und dem Meßsignal auf die Meßgröße geschlossen wird, dadurch gekennzeichnet, daß die Hilfsgröße den zeitlichen Verlauf eines pseudozufälligen Rauschsignals besitzt, die von einem steuerbaren Hilfsgrößengenerator (5), unter Steuerung eines von einem Prozessor (4) abgegebenen Steuersignals, abgegeben und nach jedem Meßintervall für eine festlegbare Zeitspanne unterbrochen wird,

daß ein analoges Meßsignal über einen Analog/Digitalwandler (3) als digitalisiertes Meßsignal dem Prozessor (4) zugeführt wird,

und daß die aus der bekannten Hilfsgröße resultierenden Anteile der Meßgröße oder des Meßsignals herausgefiltert und nur aus den aus der Hilfsgröße resultierenden Anteilen des Meßsignals die Meßgröße bestimmt wird,

11

und daß das vom Prozessor (4) abgegebene Steuersignal mit dem Meßsignal zu einer kreuzkorrelationsähnlichen Funktion verarbeitet wird,

wobei die Hilfsgröße und die kreuzkorrelationsähnliche Funktion dergestalt sind, daß die Auswirkungen von Offsetgrößen auf das Meßergebnis eliminiert werden,

und wobei die Werte der zur Bestimmung der Meßgröße verwendeten kreuzkorrelationsähnlichen Funktion so ausgewertet werden, daß die Auswirkungen eines im Meßsignal enthaltenen linearen Störanteils auf das Meßergebnis eliminiert werden und daß Einflüsse von Digitalisierungsfehlern auf das Meßergebnis minimiert werden.

2. Verfahren nach Anspruch 1,

dadurch gekennzeichnet, daß der Meßvorgang mehrfach wiederholt und die aus jedem Meßvorgang resultierenden Meßgrößen gemittelt werden.

3. Verfahren nach Anspruch 1 oder 2,

dadurch gekenzeichnet, daß die Hilfsgröße zeitdiskret und/oder amplitudendiskret ist.

4. Verfahren nach einem der vorstehenden Ansprüche,

dadurch gekennzeichnet, daß die Hilfsgröße aus einer Folge von rechteckförmigen Impulsen unterschiedlicher Zeitdauer und/oder unterschiedlicher Amplitude besteht.

5. Verfahren nach einem der vorstehenden Ansprüche,

dadurch gekennzeichnet, daß die Hilfsgröße den zeitlichen Verlauf eines digitalen, mehrstufigen Pseudozufallssignals hat.

6. Verfahren nach einem der vorstehenden Ansprüche,

dadurch gekennzeichnet, daß die Hilfsgröße einen ähnlichen zeitlichen Verlauf wie ein mehrstufiges, digitales Pseudorauschsignal hat, wenn dieses nach jedem Meßintervall für eine festlegbare Zeitdauer unterbrochen wird.

7. Verfahren nach einem der vorstehenden Ansprüche,

dadurch gekennzeichnet, daß die Hilfsgröße den zeitlichen Verlauf eines digitalen, mehrstufigen, vorzugsweise ternären Pseudozufallssignals maximaler Länge minimaler Dauer hat.

8. Verfahren nach einem der vorstehenden Ansprüche,

dadurch gekennzeichnet, daß die Hilfsgröße den zeitlichen Verlauf eines multifrequenten, digitalen, mehrstufigen Signals hat.

9. Verfahren nach einem der vorstehenden Ansprüche,

dadurch gekennzeichnet, daß die Hilfsgröße durch Umpolen und/oder Ab-bzw. Zuschalten des einen konstanten Wert abgebenden Hilfsgrößengenerators (5) erzeugt wird.

10. Verfahren nach einem der vorstehenden Ansprüche,

dadurch gekennzeichnet, daß die Amplitude der Hilfsgröße aus der Referenzspannung des Analog/Digital-Wandlers (3) gewonnen wird.

11. Verfahren nach einem der vorstehenden Ansprüche,

dadurch gekennzeichnet, daß es zur Messung von Kapazitäten, Induktivitäten und/oder Widerständen sowie komplexen Widerständen eingesetzt wird, wobei die Hilfsgröße ein Strom ist, der durch das Meßobjekt fließt und das Meßsignal die Spannung am Meßobjekt ist.

12. Verfahren nach einem der vorstehenden Ansprüche,

dadurch gekennzeichnet, daß es zur Messung von Kapazitäten, Induktivitäten und/oder Widerständen sowie komplexen Widerständen, eingesetzt wird, wobei die Hilfsgröße eine Spannung ist, die am Meßobjekt anliegt und das Meßsignal der Strom ist, der durch das Meßobjekt fließt.

13. Verfahren nach einem der vorstehenden Ansprüche,

dadurch gekennzeichnet, daß die Vorrichtung oder das Verfahren auf Brückenschaltungen angewendet wird, wobei die Versorgungsspannung der Meßbrücke über den Hilfsgrößengenerator (5) vorgegeben und die Brückenspannung als direkt zu messende Größe verwendet wird.

14. Verwendung des Verfahrens nach einem der vorstehenden Ansprüche zur Messung und/oder Überprüfung von Bauelementen, welche Teile einer eingeschalteten elektronischen Schaltung sind.

15. Verwendung des Verfahrens nach einem der vorstehenden Ansprüche dadurch gekennzeichnet, daß es zur Messung von Übersprechen, elektromagnetischen Kopplungen und/oder elektromagnetischer Verträglichkeit, eingesetzt wird, wobei die Hilfsgröße zur Steuerung einer Störquelle oder als Störsignal verwendet wird und das Signal an der gestörten Schaltung oder dem gestörten Kanal als Meßsignal dient, wobei das Signal an der gestörten Schaltung oder dem gestörten Kanal ebenfalls einen pseudozufälligen Verlauf haben kann.

16. Verwendung des Verfahrens nach einem der vorstehenden Ansprüche zur elektrischen Messung elektrischer und/oder nichtelektrischer Größen, beispielsweise bei kapazitiven, induktiven, resistiven, magnetischen, elektrischen und/oder optischen Meßwertaufnehmern, Sensoren und intelligenten Sensoren zur Messung von nichtelektrischen, beispielsweise mechanischen, physikalischen oder chemischen und/oder elektrischen Größen und/oder Längen, Dichten, Massen, Kräften, Temperaturen, Winkeln, Strahlung, Licht, Stoffkonzentration, Stoffzusammensetzung, Schallwellen, Feuchtigkeit, Drücken, Dehnungen, Trübungen, Absorptionsspektren, Füllständen, Durchflußmessungen oder daraus ableitbaren Größen.

17. Vorrichtung zur Duchführung des Verfahrens nach Anspruch 1, dadurch gekennzeichnet, daß ein Mikroprozessor (4) vorgesehen ist, dessen Ausgang einerseits mit einer Anzeigeeinheit (6) und andererseits mit dem Hilfsgrößengenerator (5) zur Abgabe von Steuersignalen an den Hilfsgrößengenerator (5) verbunden ist, daß der Ausgang des Hilfsgrößengenerators eine Hilfsgröße an das Meßobjekt (1) abgibt, das mit einem Meßwertauf nehmer oder Sensorelement (2) zur Erfassung des Meßwertes verbunden ist, daß der Ausgang des Meßwertaufnehmers oder Sensorelements (2) zur Abgabe des Meßsignals mit dem Eingang des Analog/Digital-Wandlers (3) verbunden ist, und daß der Ausgang des Analog/Digital-Wandlers (3) mit dem Eingang des Mikroprozessors verbunden ist.

18. Vorrichtung nach einem der vorstehenden Ansprüche, dadurch gekennzeichnet, daß der Hilfsgrößengenerator drei Schalter (S1, S2, S3) enthält, von denen der erste Schalter (S1) an eine positive Referenzspannung ($+U_{ref}$), der zweite Schalter (S2) an Masse oder Bezugspotential und der dritte Schalter (S3) an eine negative Referenzspannung ($-U_{ref}$) angeschlossen ist, wobei die positive und negative Referenzspannung ($+U_{ref}$, $-U_{ref}$) vom Analog/Digital-Wandler (3) abgegeben werden können, daß die zusammengeschalteten Ausgänge der Schalter (S1, S2, S3) über einen Widerstand (R7) mit dem invertierenden Eingang eines Verstärkers (OP4) verbunden sind, dessen nichtinvertierender Eingang mit Masse oder Bezugspotential verbunden ist und dessen Ausgang über eine zu bestimmende Kapazität (Cx) mit seinem invertierenden Eingang verbunden ist und daß der Ausgang des Operationsverstärkers (OP4) mit einem Eingang des Analog/Digital-Wandlers (3) verbunden ist, wobei die Schalter (S1, S2, S3) mittels vom Mikroprozessor (4) abgegebener Steuersignale angesteuert werden.

19. Vorrichtung nach einem der vorstehenden Ansprüche, dadurch gekennzeichnet, daß der Hilfsgrößengenerator drei Schalter (S1, S2, S3) enthält, von denen der erste Schalter (S1) an eine positive Referenzspannung ($+U_{ref}$), der zweite Schalter (S2) an Masse oder Bezugspotential und der dritte Schalter (S3) an eine negative Referenzspannung ($-U_{ref}$) angeschlossen ist, wobei die positive und negative Referenzspannung ($+U_{ref}$, $-U_{ref}$) vom Analog/Digital-Wandler (3) abgegeben werden werden können, daß die zusammengeschalteten Ausgänge der Schalter (S1, S2, S3) über die zu messende Induktivität (Lx) mit dem invertierenden Eingang eines Verstärkers (OP4) verbunden sind, dessen nichtinvertierender Eingang mit Masse oder Bezugspotential verbunden ist und dessen Ausgang über einen Widerstand (R8) mit seinem invertierenden Eingang verbunden ist und daß der Ausgang des Operationsverstärkers (OP4) mit einem Eingang des Analog/Digital-Wandlers (3) verbunden ist, wobei die Schalter (S1, S2, S3) mittels vom Mikroprozessor (4) abgegebener Steuersignale angesteuert werden.

20. Vorrichtung nach Anspruch 18 und 19 dadurch gekennzeichnet, daß der Meßbereich der Vorrichtungen umgeschaltet werden kann, indem den Widerständen (R7, R8) weitere Widerstände parallel geschaltet werden, wobei die Umschaltung mit Hilfe der in Fig. 10 dargestellten Analogschalter mit sehr geringer Durchlaßspannung erfolgen kann, und diese Analogschalter aus einem Operationsverstärker (OP7) mit einem konventionellen Analogschalter (S11) in der Rückführung besteht, wobei im eingeschalteten Zustand das Eingangssignal an dem nichtinvertierenden Eingang des Operationsverstärkers (OP7) anliegt und der konventionelle Analogschalter (S11) in der Rückführung des Operationsverstärkers (OP7) geschlossen ist, so daß sich am invertierenden Eingang als Ausgangssignal das Eingangssignal ergibt; im ausgeschalteten Zustand ist der nichtinvertierende Eingang über einen zweiten realen Analogschalter (S12) mit Masse bzw. Bezugspotential verbunden, wobei der Schalter (S11) geöffnet ist, so daß das Ausgangssignal des so realisierten Analogschalters am invertierenden Eingang des (OP7) unabhängig vom Eingangssignal ist, der Schalter (S10) verhindert eine Belastung des Eingangssignals.

21. Vorrichtung nach einem der vorstehenden Ansprüche, dadurch gekennzeichnet, daß der Hilfsgrößengenerator drei Schalter (S1, S2, S3) enthält, von denen der erste Schalter (S1) an eine positive Referenzspannung ($+U_{ref}$), der zweite Schalter (S2) an Masse oder Bezugspotential und der dritte Schalter (S3) an eine negative Referenzspannung ($-U_{ref}$) angeschlossen ist, wobei die positive und negative Referenzspannung ($+U_{ref}$, $-U_{ref}$) vom Analog/Digital-Wandler (3) abgegeben werden können, daß die zusammengeschalteten Ausgänge der Schalter (S1, S2, S3) als Versorgungsspannung an eine Meßbrücke geschaltet werden und daß die Brückenspannung über den Meßwertaufnehmer (2), der einem Differenzverstärker enthält, mit einem Eingang des Analog/Digital-Wandlers (3) verbunden ist, wobei die Schalter (S1, S2, S3) mittels vom Mikroprozessor (4) abgegebener Steuersignale angesteuert werden.

22. Vorrichtung nach einem der vorstehenden Ansprüche, dadurch gekennzeichnet, daß das Verfahren und/oder die Vorrichtung vorzugsweise als digitaler Ersatz für analoge Trägerfrequenzmeßbrücken und/oder Meßverstärker eingesetzt wird.

23. Vorrichtung nach einem der vorstehenden Ansprüche, dadurch gekennzeichnet, daß bei der elektrischen Messung nichtelektrischer Größen die Hilfsgröße und/oder die gemessene Größe nichtelektrische Größen sind.

# FIG. 1

5

1

2

3

4

6

Hilfsgröße

Meßgröße

Meßsignal

Steuersignal

0 271 856

FIG. 2 :

# FIG.3

# FIG. 4

Kondensator entladen.

Bestimmung der Abtastzeit
und Einstellen des Meßbereiches

Kondensator entladen

Einprägen des geeignet geformten
Kondensatorstroms und Berechnung
einer kreuzkorrelationsähnlichen
Funktion aus Kondensatorspannung
und -strom

Multiplikation der KKF mit einer Kalibrierungskonstanten, welche die Anzahl
der Meßwerte berücksichtigt

Berechnung des Kapazitätswertes

0 271 856

# FIG. 4A

Start

Abtastzeit bestimmen

Kondensatorstrom ausgeben und KKF berechnen

Kalibrierungskonstante eintragen

Mittelwert der KKF berechnen

Produkt aus dem Mittelwert der KKF und dem Nenner der Kalibrierungskonstanten berechnen

Produkt aus der Abtastzeit und dem Zähler der Kalibrierungskonstanten berechnen

Division des ersten Produkts durch das zweite Produkt

Wandlung der Vorkommazahl in eine dezimale Darstellung

Wandlung der Nachkommazahl in eine dezimale Darstellung

Ausgabe des Kapazitätsmeßwerts

FIG. 4B

```
┌──────────────────────────────────────────────────────┐
│ Eintragen der Schaltercodes für den kleinen Meßbereich │
└──────────────────────────────────────────────────────┘
                         │
                         ▼
┌──────────────────────────────────────────────────┐
│ Zähler für die Stromimpulse auf Null setzen        │
└──────────────────────────────────────────────────┘
                         │
                         ▼
        ┌────────────────────────┐
        │ Kondensator entladen    │
        └────────────────────────┘
                         │
                         ▼
     ┌──────────────────────────────────┐
     │ Stromimpuls minimaler Dauer ausgeben │
     └──────────────────────────────────┘
                         │
                         ▼
       ┌──────────────────────────────┐
       │ Kondensatorspannung messen    │
       └──────────────────────────────┘
                         │
                         ▼
     ╱ Kondensatorspannung größer als der ╲      J
    ╱ vom Programm ENTLADEN übergeben Grenzwert ? ╲──────►
     ╲                                  ╱
            │ N
            ▼
   ┌──────────────────────────────────┐
   │ Zähler für die Stromimpulse erhöhen │
   └──────────────────────────────────┘
                         │
                         ▼
     ╱ Abtastzeit < 10 ms oder           ╲        J
    ╱ ist bereits der große Meßbereich eingestellt ? ╲──────►
     ╲                                  ╱
            │ N
            ▼
     ┌──────────────────────────────┐
     │ Großen Meßbereich einstellen  │
     └──────────────────────────────┘
                         │
                         ▼
        ┌────────────────────────┐
        │ Kondensator entladen    │
        └────────────────────────┘
                         │
                         ▼
        ┌────────────────────────┐
        │ Zähler zurücksetzen     │
        └────────────────────────┘
                         │
                         ▼
   ╱ Ist die maximal zählbare Abtastzeit erreicht ? ╲   N
  ╱                                              ╲──────►
   ╲                                            ╱
            │ J
            ▼
 ┌──────────────────────────────────────────┐
 │ Berechnung der Werte für die Zähler, die   │
 │ die Abtastzeit im Programm XXFC steuern    │
 └──────────────────────────────────────────┘
                         │
                         ▼
      ┌──────────────────────────────┐
      │ Berechnung der Abtastzeit in µs │
      └──────────────────────────────┘
                         │
                         ▼
            ┌──────────┐
            │ Return   │
            └──────────┘
```

# FIG. 4C

FIG. 40

Übernahme der Werte für die Zähler, welche die Abtastzeit steuern, von dem Programm ABTAST.

Eintragen der Schaltercodes für den gewählten Meßbereich in den Speicherbereich für das PRTS 8

Zähler für die Durchläufe so laden, daß 160 Meßwerte bestimmt werden.

Speicherbereich für die KKF löschen

Kapazität entladen

ADC starten und Ende der Wandlung abwarten

Strompuls ausgeben und für die Dauer der Abtastzeit halten

Meßwert einlesen

Liegt der Meßwert an einem Rand des Wandlungsbereichs ?    J →    Sprung zum Anfang des Programms CBEST

N

Letzten Meßwert in die KKF einarbeiten

Wurde die KKF aus 160 Meßwerten berechnet ?    N →

J

Return

FIG. 5

FIG.6

FIG.7

## FIG. 8

FIG. 9

FIG. 10